# EUROPEAN PATENT SPECIFICATION

(11) **EP 3 437 930 B1**
(45) Date of publication and mention of the grant of the patent: **28.07.2021**
(21) Application number: 18175582.8
(22) Date of filing: 01.06.2018
(51) Int. Cl.: B60R 11/04

(54) **CAMERA DEVICE AND MOTOR VEHICLE THEREWITH**
KAMERAVORRICHTUNG UND KRAFTFAHRZEUG MIT DERARTIGER VORRICHTUNG
DISPOSITIF DE CAMÉRA ET VÉHICULE AUTOMOBILE COMPRENANT UN TEL DISPOSITIF

(30) Priority: 01.08.2017 DE 102017117403
(43) Date of publication of application: 06.02.2019
(73) Proprietor: SMR Patents S.à.r.l., 2453 Luxembourg (LU)
(72) Inventor: LITTLE, Andrew Brian, London, Greater London EC3A 6AP (GB); WILSON, Vincent, London, Greater London EC3A 6AP (GB); HERRMANN, Andreas, 70327 Stuttgart (DE); SLAMA, Alexander, 70327 Stuttgart (DE); SCHÄFER, Henrik, 70174 Stuttgart (DE)
(74) Representative: Weber-Bruls, Dorothée

(56) References cited:
- EP-A2- 2 525 029
- DE-A1-102008 008 656
- JP-A- 2012 132 988
- US-A1- 2016 065 796

## Description

The invention is related to a camera device adapted to be integrated into side parts of a vehicle body, into doors or exterior rearview devices of a motor vehicle, and is directed to a motor vehicle with such a camera device.

Modern motor vehicles are fitted with an increasing amount of peripheral devices, such as external rear view devices with one or more reflective elements, external cameras, sensors and/or electronic toll payment systems.

The term "rear view" is here defined as a view of the surrounding area of the motor vehicle, which is not in the field of view of a driver, i.e. the directions opposing, left, right, below and above of the viewing direction, but can also comprise the view in the direction of the viewing direction of the driver and/or any combinations of the directions.

Different functions and devices can be incorporated into and/or controlled with the help of rear view devices. Of particular interest are functions and devices to enhance, extend and/or sustain the functionality of the rear view device during normal or extreme conditions. This can comprise heating and/or cooling means, cleaning means such as wipers, liquid and/or gaseous sprays, actuator means for moving the rear view device or parts of it, such as for example a display, a camera system and/or parts of a camera system, comprising for example lenses, filters, light sources, adaptive optics like deformable mirrors, sensors and/or mirrors, and/or actuator means for inducing movement of other objects, for example parts of the vehicle and/or objects surrounding the vehicle. Furthermore it can comprise linear tracks and/or rotating wheels, like for example a filter wheel, for exchanging optical elements, comprising for example lenses, mirrors, light sources, sensors, adaptive optics like deformable mirrors and/or filters.

Prominent examples for functions and devices incorporated into and/or controlled with the help of rear view devices comprise illumination devices, for example any kind of light module like an external light module, an internal light module, a front light, a back light, a fog light, a brake light, an acceleration light, a turn signal, a logo lamp, a puddle light, a flash light, a navigation light, a position light, an emergency light, a spotlight, a green light, a red light, a warning light, a turn signal light module, an approach light, a search light, an information light, a display and/or any combination thereof.

Further examples for functions and devices incorporated into and/or controlled with the help of rear view devices can comprise for example a tiredness detection system, a microsleep detection system, a distance and/or velocity determination system, for example a LIDAR (Light detection and ranging) system, a blind spot indicator system, a lane change assistant system, a navigation assistant system, a tracking assistant system, a human-machine interaction system, a machine-machine interaction system, an emergency and precaution assistant system, like an accident avoiding assistant system, a counter-measures assistant system, a brake assistant system, a steering assistant system, an acceleration assistant system, an escape assistant system, comprising for example an ejection seat system, a direction indicator, a blind spot indicator, an approach system, a strong braking system, an emergency braking system, a charging status indicator, a vehicle mode system, comprising for example a sports mode system, an economy mode system, an autonomous drive mode system, a sleep mode system and an anti-theft system, a vehicle locked indicator system, a vehicle stolen indicator, a warning signal system, a temperature indicator system, a weather indicator system, a traffic light signal system, a fuel status system and/or any combination thereof.

A camera module to be used in a rear view device can comprise a plurality of different optical elements, a.o. a variety of sensors and light sources, as well as housing parts. The housing of a camera module can be made out of plastic, metal, glass, any other suitable material and/or any combinations thereof and can be used in combination with the techniques described below to change or modify the properties of the material or the material surface. Housings are for example described in German patent application No. 102016108247.3. Further, the camera can comprise for example CCD or CMOS or light field sensors, as for example described in German patent application No. 102011053999. Also an area of the sensor can be reserved for different purposes, for example to detect a test beam, as described in U.S. patent No. 8,031,224. The camera module can also be equipped with apparatuses for light intensity adjustment as described for example in U.S. patent application No. 14/809,509 and light level intensifier tubes as described in U.S. patent application No. 09/771,140. Still further, the camera module or a cover adapted to the camera module can be moved using different actuators, drives and/or a flexible track, as for example described in German application No. 102016108247.3.

The camera module can also comprise cleaning elements to clean the optical element facing outwards and being exposed to the environment. The cleaning element can for example comprise wipers, brushes, lips, nozzles, fans and similar elements as are described in European patent application No. 14165197.6, European patent application No. 13163677.1, and European patent No. 1673260. The cleaning devices are not limited in composition, and may for example comprise any fabric, elastomeric, sponge, brush, or combination of these. Special wiper elements comprising wiper arms, wiper blades, wiping cloth, wiping tissue and combinations thereof are described in European patent application No. 14165197.6. A reservoir for holding a cleaning liquid is described in European patent application No. 14165197.6. Such a reservoir can be attached to or integrated into the camera module to provide the cleaning liquid to the optical elements of the camera module. Different methods may be used to detect dirt or other obscurations preventing or reducing the functioning of the camera module, such as described in U.S. patent No. 8,395,514, European patent No. 1328141, and U.S. patent No. 8,031,224. Also light sources can be installed or integrated into the camera module to increase the visibility of surrounding objects, measure distances and directions and detect dirt, such as described in U.S. patent No. 8,031,224, U.S. patent application No. 62/470,658, and U.S. patent application No. 09/771,140.

Different heating means, like heating coils, heating devices integrated into the lens holder or the bezel, or other heating elements can be used to impede condensation and icing at the surface of optical elements, as for example described in German patent application No. 102016108247.3, U.S. patent application No. 62/470,658, and German patent application No. 102016107545.0.

A watertight seal against weather effects, as well as against the influence of washing processes with detergents, solvents and high pressure cleaners can be used on the housing of the camera module as described in U.S. patent application No. 13/090,127. Alternatively, the housing can be made of a body comprising plastic and conductive material, wherein the conductive material is dispersed in the plastic material to form a conductive mass to allow a power source, preferably a DC voltage source, to connect via at least two electrodes to the body and heat the body accordingly, as described in German patent application No. 102016107545.0. Different types of fixings can be used to fix the camera module to the vehicle or other components, such as for example the snap-fit connection described in European patent No. 2233360.

Shape memory alloys (SMA) are used for various functions with rear view devices. European patent application No. 3098444 relates to an actuator device for a rear view device of a motor vehicle comprising: at least one retaining element; at least one adjusting element which can be transferred into a plurality of functional positions, in particular from a basic position into at least one end position; at least one driving means which comprises at least one shape-memory element which is, in particular, in the form of a wire, which extends between the retaining element and the adjusting element and can be or is secured to both, where the extension of said shape-memory element can be modified on being actuated, in particular on being electrically energized, and by means of the modification of the extension of which the at least one adjusting element can be transferred from one functional position into another functional position, in particular from the basic position into the end position or vice versa; at least one heat-conducting means which lies in contact with the driving means at least in the end position of the adjusting element; and wherein at least one switching means, by means of which the at least one driving means and the at least one heat-conducting means can be or are arranged with respect to one another with no contact in the basic position of the adjusting element and/or by means of which the at least one driving means and the at least one heat-conducting means can be or are arranged touching one another at least in sections at least in the end position of the adjusting element. A further actuator for an exterior rear view mirror of a vehicle is known from European patent application No. 2781743 and has at least one actuator pin, at least one drum body enclosing a cavity, in which the actuator pin can be arranged or is arranged in a non-rotational manner, at least one clamping means which comprises at least one shape-memory element which can be fixed or is fixed to the drum body and with which the drum body can be moved in a first rotational direction, and at least one return means which comprises at least one shape-memory element which can be fixed or is fixed to the drum body and with which the drum body can be moved in a second rotational direction, characterized in that the clamping means and/or the return means can be fixed or are fixed on a winding portion of the drum body and in the winding portion of the drum body at least quarter of a winding, in particular at least half a winding, in particular an entire winding, in particular several windings are applied.

Obstructions and dirt deposits on an outer optical element of a vehicle rear view or vision systems can seriously impede the effectiveness and function of the same. As exterior rear view or vision systems on vehicles provide a legal and safety feature, every effort to minimise any visual obstacle has high benefit. There is a significant increase in the amount of camera monitoring and vision systems that are included on modern vehicles. One goal by many automotive manufacturers is to replace existing traditional glass mirror based systems with high tech camera monitoring solutions. This is to improve vehicle aesthetics and aerodynamic quality whilst also adding further features to vehicles. Many of the conceptual ideas however still show mirror replacement cameras as external positioned components.

Of particular interest are cleaning means for a camera module of a motor vehicle as an effective vision systems needs to be free of any kind of obstruction provided by debris, dirt, dust, water droplets, snow, ice and the like. Historically, for traditional exterior mirrors, the driver has simply cleaned the glass surface manually when vision is impaired. For camera based systems such a manual cleaning is not practical in particular when a plurality of camera systems are used. With deployable camera modules, which assist in damage protection, a manual cleaning becomes even more troublesome.

Several camera cleaning systems have been developed, see for example the International patent application No. PCT/EP2017/060104. This known cleaning system for a camera lens comprises a cover adapted to at least partially enclose at least one camera having at least one camera lens; drive means adapted to rotationally move the cover relative to the camera; and a housing adapted to hold the cover and the drive means, wherein the housing at least partially encloses the cover and comprises at least one opening for allowing electromagnetic radiation to pass through the cover to the lens. The cover can comprises essentially transparent and/or essentially scratch-proof material, preferably the cover comprises Gorilla-Glas™. The drive means can comprise a motor and/or a turbine. Still further, at least one cleaning device, which is adapted to clean an outer surface of the cover and comprises at least one brush, at least one lip, at least one nozzle and/or at least one fan, can be comprised by the known cleaning system.

Moving a camera module attached to a motor vehicle typically leads to noise generation. This can be a disadvantage due to several reasons. First, noise can scare and/or disturb humans as well as animals inside the motor vehicle as well as close by. It is often regarded as a kind of environmental pollution, similar to light, odors, pollutants and waste, therefore there is a need for reducing noises. Second, generating noise means that part of the energy applied to move the camera module is converted into mechanical vibrations and/or friction. This leads not only to an increased mechanical stress of the parts and therefore to a reduced lifetime of the components, but also to an increased amount of heat and a reduced energy efficiency, increasing costs and additionally burdening the environment.

For example US patent application No. 2014/0211010 A1 refers to a deployable camera system including a body defining a cavity therein, and a camera including a housing having an exterior surface. The camera is reversibly transitionable between a retracted state or stowed position in which the camera is recessed into the cavity and the exterior surface is substantially flush with the body, and a deployed state or position wherein the camera protrudes from the cavity and the exterior surface is not substantially flush with the body. The known deployable camera system includes a shape memory alloy element transitionable between a first state and a second state in response to a thermal activation signal.

A cleaning system for an on-vehicle optical sensor as known from JP 2012 132988 A is configured such that: a compartment air conditioner for air conditioning controlling inside a compartment and a nozzle of an optical sensor unit are connected with a pipe; and air which is air conditioning controlled by the compartment air conditioner is made to flow through the pipe by wind force generated upon the air conditioning control and is injected towards a lens surface of a lens of a camera from a cleaning injection port of the nozzle.

US 2016/065796 A1 describes a vehicle that includes a vehicle body structure and a video camera assembly. The video camera assembly includes a base member, a video camera, a video display and an image processor. The base member is fixedly mounted to a side surface of the vehicle. The video camera is moveably supported to the base member for movement between a retracted orientation adjacent to the side surface and an extended orientation extended outward away from the side surface to capture a video image of an area outside the vehicle. The video display is supported within the vehicle such that the video display is visible within a passenger compartment of the vehicle. The image processor is operatively coupled to the video camera and the video display to process the video image captured by the video camera and to stream a video view to the video display.

DE 10 2008 008656 A1 relates to a camera system for a motor vehicle having a rotatably mounted camera unit which has an optical element and can be brought into a rest position and into an active position via a motor, and to a protective element, which can be guided into a closed position and into an open position, wherein in the closed position the camera unit is inaccessible from the outside behind the protective element in its rest position and in the open position of the protective element the camera unit the active position for image acquisition is movable. Further, the camera system has a cleaning unit, wherein the cleaning unit cleans the optical element of the camera unit.

EP 2 525 029 A2 discloses an operating device for a movable part of a vehicle, particularly of an external door handle of a vehicle. The device comprises a support pivotable between a retracted position and a deployed position. The support comprises a camera for capturing an image of an environment of the vehicle and serves as an operating element for the movable part when it is in the deployed position.

It is the object of the present invention to provide a motor vehicle with a camera device adapted to be integrated into side parts of a vehicle body, into doors or exterior rearview devices of the motor vehicle that overcomes the drawbacks of the prior art. In particular the camera device is to make usage of a deployment system with reduced noise generation and/or enhanced cleaning capabilities and a control unit comprising a microcontroller for controlling at least the deployment system and the cleaning means.

This object is solved by a motor vehicle according to claim 1. Preferred embodiments of the motor vehicle are described in claims 2 to 22.

It is advantageous according to the invention that a camera device for a motor vehicle with a vehicle body having a cavity comprises: a camera module with a module body having at least one aperture, at least one sensor adapted to detect electromagnetic radiation of at least one specific spectral range and being arranged within the module body such that electromagnetic radiation can reach the sensor when passing the aperture, and at least one optical element mounted to substantially cover, fill or close the aperture; a deployment system for moving the camera module between a retracted state, in which at least the optical element is arranged within the cavity of the vehicle body, with preferably the outer surface of the camera module body being generally flush with the exterior of the vehicle body, and a deployed state, in which the camera sensor is operable and at least the optical element protrudes from the vehicle body; and cleaning means for cleaning the optical element during a movement of the camera module between the retracted state and the deployed state.

With the invention it is also proposed that the optical element comprises at least one lens, light window, glass plate, transparent cover, semi-transparent cover, a scratch-proof cover, filter, wave plate, beam splitter, polarizer, diffuser, mirror element, prism, window, beam displacer, grating and/or holographic plate.

It is preferred according to the invention that the deployment system comprises at least one low-noise actuator, which preferably is selected from a group comprising an electrical actuator, an electromagnetic actuator, a shape memory alloy (SMA) actuator and/or a piezo actuator.

Embodiments of the invention can be characterized in that the cleaning means comprise at least one static cleaning means, which does not move with the camera module, and/or the cleaning means comprise at least one moving cleaning means which moves together with the camera module, and/or the cleaning means comprise at least one mechanical cleaning means for contacting the optical element when the camera module is moved between the retracted state and the deployed state, and/or the cleaning means comprise at least one active cleaning means for cleaning the optical element by applying a cleaning fluid, with the active cleaning means preferably comprising at least one nozzle, and/or at least a part of the cleaning means, preferably the nozzle, can be moved relative to the module body and/or the vehicle body.

Camera devices can also comprise sealing means for sealing the camera module body within the vehicle body at least in the retracted state, with preferably the mechanical cleaning means and the sealing means being connected or provided together.

It is advantageous that the camera device further comprises actuation means for manually activating the movement of the camera module and/or of the cleaning means and/or for manually activating a cleaning action of the cleaning means, with preferably the actuation means being provided on the camera module body.

Still further, it is proposed that the camera device comprises heating means, preferably a heater of the heating means in thermal contact with the optical element.

According to the invention the camera device can also comprise information and/or warning means, preferably an information and/or warning element, an information and/or warning element comprising in particular a display module and/or a light module, preferably provided on the camera module body. The information and/or warning element of the information and/or warning means can be arranged within the cavity of the vehicle body in the retracted state and/or can be discernible from the outside of the vehicle body at least in the deployed state, and/or the information and/or warning element of the information and/or warning means can be cleaned by the cleaning means.

It is advantageous according to the invention that the camera device also comprises sound means, preferably a sound system, in particular a sound system comprising a noise cancellation system. The sound means can comprise at least one microphone for detecting sound waves and/or at least one loudspeaker for outputting sound waves, in particular for compensating detected sound waves.

Still further, preferred camera devices can comprise a control unit for the heating means, the sound means and/or the information and/or warning means. The control unit can determine the degree of soiling and/or cleaning, in particular of the optical element, and/or the control unit can receive signals from the actuation means, at least one dirt sensor, the clock, the counter and/or a vehicle component.

In additional, the vehicle body is provided with a cavity which receives at least a part of the camera device, with the static cleaning means, the sealing means, the heating means and/or the sound means being attached to the outside of the vehicle body or within the cavity, and/or with the deployment system being arranged within the cavity.

The invention also proposes that the control unit is connected to the vehicle engine control unit and/or electronic engine management system, or the control unit is provided by and/or integrated within the vehicle engine control unit and/or electronic engine management system.

Still further the invention proposes the control unit receiving signals from the actuation means, the dirt sensor, the clock, the counter, a sensor and/or camera unit and/or the vehicle component, with the vehicle component preferably being comprised by a locking system, a windshield cleaning system, a head lamp cleaning system, a back lamp cleaning system, an engine system, a braking system and/or display system.

To reduce and even substantially avoid noise generation as well as mechanical vibrations and/or friction, the deployment system of a camera device makes usage of a low-noise actuator, in particular an electrical actuator, an electromagnetic actuator, a shape memory alloy (SMA) and/or a piezo actuator, to move the camera module. The movement of the camera module follows the same pattern as many traditional exterior mirrors found on vehicles which are often referred to as powerfold mirrors, in particular automatic electric powerfold mirrors. In detail, the camera module is moved between a retraced state, in which the camera module is stowed away in a cavity of a vehicle body, with preferably the outer surface of the camera module being generally flush with the exterior of the vehicle body, retaining a sleek vehicle styling, and a deployed state, in which the camera module is operable and protruding from the vehicle body. Alternatively or additionally, an active noise cancellation system is used to reduce the noise generated by one or more actuators.

To protect the camera device in particular for vandalism, the deployable systems is preferably positioned within the vehicle body. Also the optical element of the camera is arranged within the cavity in the retractable state.

This placement also improves the overall sleek look of the vehicle from a design and styling perspective.

To assist with the cleaning of the camera optical element, the optical element is cleaned when the camera is moved from the retracted state to the deployed state and vice versa. Such a cleaning action must not take place during each movement, but might be restricted to e.g. only the deployment movement.

The optical element can be provided by a lens, and the lens can be washed by an integral fine spray water jet and then can pass over a series of wiper blades to remove any debris.

To further assist in cleaning the fine spray water jet can be activated by the driver of the motor vehicle. This can be linked to the windscreen and/or head lamp washer jet system for activation. For example, every fifth pull of standard washer jet system can trigger the cleaning means of the camera device, in particular by activating a fine spray water jet. Applying a fine water jet spray to the camera outer optical element aims to reduce and remove any contaminants and debris picked up whilst in transit between the retraced state and the deployed state.

The camera module itself can be placed within a housing that forms part of the outer vehicle body work. This can be positioned anywhere on the vehicle, but preferably on the side of the vehicle, so that the optimum vision angles can be achieved. Said camera module can be automatically brought into a drive position defined by the deployed state during unlocking the motor vehicle and/or starting its engine, while movement into the retracted state can be triggered when stopping the engine and/or locking the same. During these procedures the camera module receives a movement activation signal via an ECU or other control unit.

The optical element is not restricted to a lens. Rather it can comprise various different elements used in optics, such as glass or other types of transparent or semi-transparent plates, filters, waveplates, beamsplitters, polarizers, diffusers, mirrors, prisms, windows, beam displacers, gratings, holographic plates and /or any combinations thereof.

Although typically a camera module is working with the visible range of the electromagnetic spectrum, it is to be understood that the teachings of the invention are also meant to be applied to other ranges of the electromagnetic spectrum. A camera module can therefore be understood as a general device comprising a sensor, adapted to detect electromagnetic radiation of a certain wavelength range, and comprising an aperture for letting the corresponding electromagnetic radiation reach the sensor. Optical elements covering or incorporated into the aperture of the camera module are meant to be designed depending on the corresponding wavelength range. Useful examples of wavelength ranges are, beside the visual wavelength range, within or across the ultraviolet (UV) range, the infrared (IR) range, the microwave range, the radiowave range, the X-ray range, the terahertz range, the gigahertz range, the megahertz range and the kilohertz range as well as any combinations thereof.

The invention may be best understood with reference to the following description of embodiments taken together with the accompanying schematic drawings.
- FIG. 1: shows a perspective view of a deployed side camera device of a motor vehicle of the invention;
- FIG. 2: shows a perspective view of another deployed side camera device of a motor vehicle of the invention;
- FIG. 3: shows a perspective view of the camera device of FIG. 1 in its retraced position within a vehicle body;
- FIG. 4: shows a block diagram of a control unit of the invention;
- FIG. 5: shows a schematic top view of a cleaning means;
- FIG. 6: shows a schematic cross-sectional view of a cleaning device; and
- FIGs. 7a-c: show a schematic plan view, a schematic side view and a schematic front view of an imaging system.

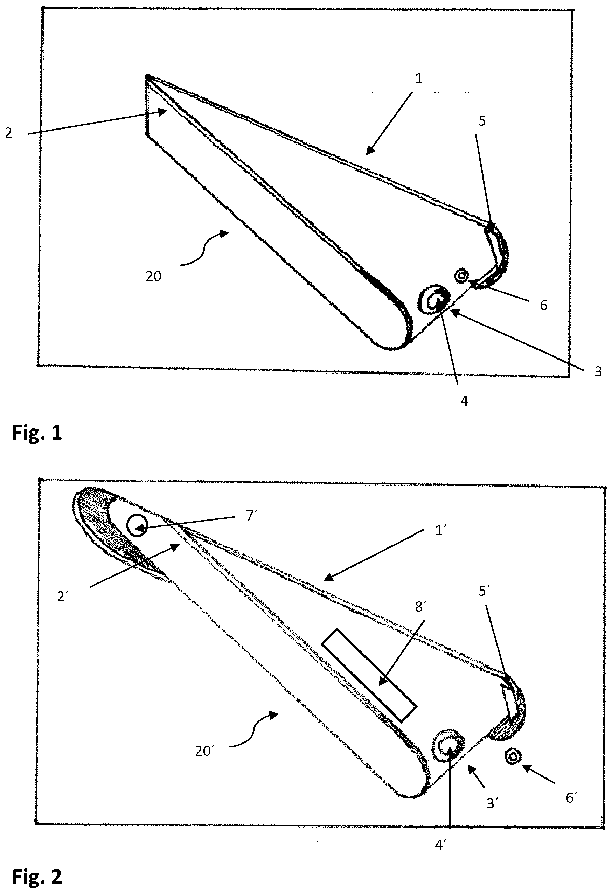

FIGS. 1 and 2 each show a side of a vehicle body 1, 1' with a camera device comprising a moveable camera module 20, 20' in a deployed state. These two embodiments of the invention differ from each other with respect to the suspension of the camera module as well as with respect to an associated cleaning device.

Camera modules of motor vehicles of the invention can be integrated into side parts of a vehicle body, but also into doors or exterior rearview devices.

The camera module 20 of Fig. 1 comprises a camera module body 2, a sensor (not shown) for receiving electromagnetic radiation and being mounted within the camera module body 2, a camera aperture 3 within the camera module body 2 for letting electromagnetic radiation from the surrounding environment pass to reach the sensor. The camera aperture 3 is covered by a light window or another optical element 4 for guiding, filtering and/or otherwise altering the properties of the electromagnetic radiation before reaching the sensor. Properties to be altered can be the direction, the intensity the polarization, the spectral range and/or the frequency. The optical element 4 also serves for covering and/or sealing the camera aperture 3 against the outside environment. The optical element 4 preferably comprises a lens.

The camera module 20' of Fig. 2 also comprises a camera module body 2', a sensor (not shown), a camera aperture 3' and an optical element 4'.

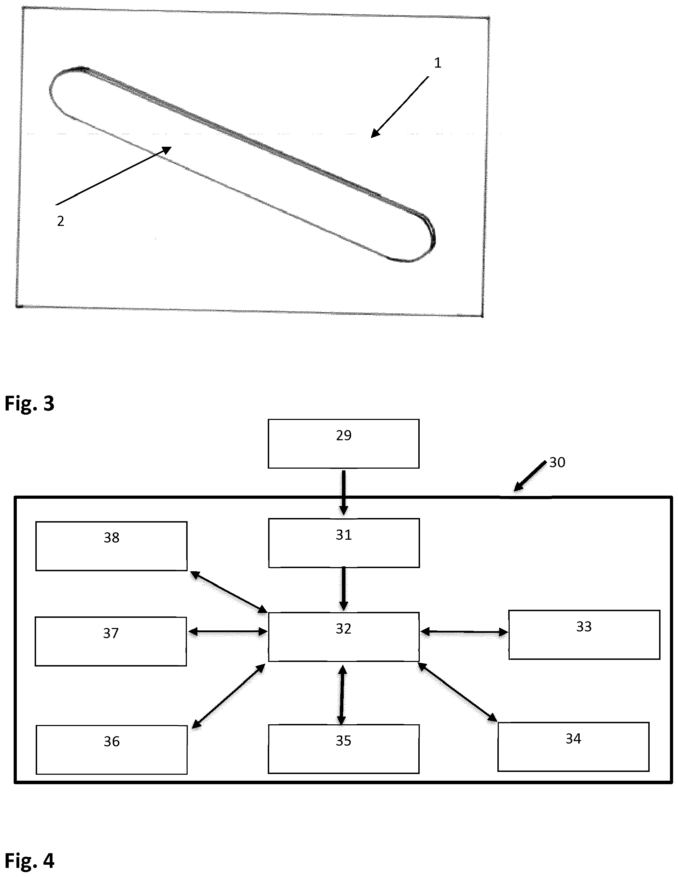

FIG. 3 shows the camera module body 2 of FIG. 1 retraced in the vehicle body 1 such that it is stowed within the vehicle body 1. In this position, the camera module 20, in particular the optical element 4, is protected against damage from the outside and against getting soiled. For an appealing appearance, the camera module body 2 is let-in flush with the vehicle body 1.

The camera module body 2' of FIG. 2 can be stowed in an analogue manner to take its retracted position.

An especially suited camera module is described in the International patent application No. PCT/EP2017/057228 filed on March 27, 2017 for IMAGING SYSTEM and claiming priority to German patent application No. DE 10 2016 106 126.3, filed on April 4, 2016 for IMAGING SYSTEM. This camera system for a vehicle comprises an image sensor for detecting electromagnetic radiation, a first lens unit and a second lens unit for focusing electromagnetic radiation and at least one transflective unit. The first and second lens units have a first and a second optical axis, respectively, and the second optical axis crosses the first optical axis at a crossing point. The transflective unit is configured to project electromagnetic radiation from the first lens unit and/or from the second lens unit essentially perpendicularly on the image sensor and the transflective unit is arranged between the image sensor, the first lens unit and the second lens unit, preferably at the crossing point. This camera module therefore can have also more than one camera aperture 3 and/or more than one optical element 4, 4' for covering and/or sealing the camera aperture 3 against the outside environment, which need to be kept clean. The transflective unit is a unit which can be actively switched between a state, in which it is transmissive, i.e. transmits light from a first light path to an image sensor of a camera device, corresponding to the sensor of the present invention for receiving electromagnetic radiation, and a state, in which it is reflective, i.e. reflects light from a second light path to the same image sensor. While in the transmissive state, the light from the second light path essentially transmits to a not used light path. While in reflective state, the light from the first light path essentially reflects to a not used light path, which can be the same not used light path as in the transmissive state for the light from the second light path. This and other aspects of the referenced documents can be alone and in combination essential for carrying out the present invention.

For the camera module 20, 20' to be able to function properly, the optical element 4, 4' has to be "clean", i.e. free of debris, dirt, water droplets, snow ice and other stuff covering the optical element 4, 4' and, thus, hindering the electromagnetic radiation to reach the camera sensor and/or distorting its properties. To ensure that the optical element 4 is clean, different cleaning means can be used according to the invention. Said cleaning means can comprise a static cleaning means 5, 5' and an active cleaning means 6, 6'.

The static cleaning means 5, 5' is mounted on or in the vehicle body 1, 1' in such a way that, when the camera module 20, 20' changes between the retraced state and the deployed state, the optical element 4, 4' comes at least partly in contact with the static cleaning means 5, 5'. With such a relative movement debris covering the optical element 4, 4' is mechanically removed by wiping or the like.

Exemplarily shown in FIGS. 1 and 2 is a static wiper blade system as static cleaning means 5, 5', which can be provided as part of a internal rubber housing. The internal rubber housing also ensures a sealing between the vehicle body 1, 1' and the camera module body 2, 2' when the camera module 20, 20' is in the retraced state, and can even seal at least partially the cavity provided within the vehicle body 1, 1' for the camera module 20 20', when the same is in the deployed state.

The static cleaning means 5, 5' can be selected from various forms and materials. For example, the static cleaning means 5, 5' can comprise wipers, in particular with wiper arms, wiper blades, wiping cloth, wiping tissues, brushes, lips and combinations thereof. In addition, as material any fabric, rubber, elastomeric, fiber or sponge material can be suited. The important feature is that the static cleaning means 5, 5' will automatically effect a cleaning when the camera module body 2, 2' changes between the retracted and the deployed state. This can happen as a result of a vehicle function being activated, for example locking or unlocking of doors, driving forwards or backwards, activating a display device of the vehicle and/or manual activation of a movement of the camera module body 2, 2' by the driver. The embodiment of FIG. 2 is provided with a push button 7' for such a manual activation.

The active cleaning means 6, 6' can also comprise various means for actively cleaning the optical element 4, 4'. In the embodiments of FIGS. 1 and 2 a nozzle is shown, which directs a jet of cleaning fluid onto the optical element 4, 4' for cleaning purposes. The cleaning fluid can be chosen from any suitable range of substances, for example water, ethanol, alcohol, clean water, distilled water, deionized water, ultrapure water and any combination of the aforementioned fluids and/or a cleaning detergent. The cleaning fluid jet can even comprise a gas jet, such as an air jet.

In FIG. 1 the nozzle of the active cleaning means 6 is located on the camera module body 2 such that it can be activated when the optical element 4 needs to be cleaned, in both the retraced and the deployed state. Such a cleaning action can be automatically initiated via a not shown control circuit of the vehicle or manually by the driver of the vehicle. For example, the control circuit can activate a water jet to exit the nozzle when the standard washer jet system of a front windshield and/or of a head light of the vehicle is activated. An activation might also be triggered in regular time intervals and/or depending on output signals of a sensor measuring the degree of soiling of the optical element 4.

In FIG. 2 the nozzle of the active cleaning means 6' is located on the vehicle body 1', or it can be located within the cavity of the camera module body 2' (not shown). The depicted location of the nozzle is just an example and should not be regarded as limiting to this specific location. Any location in which a fluid jet from the nozzle of the active cleaning means 6' can reach the optical element 4' can be used.

Locating the nozzle on the camera module body 2 has the advantage of an easy integration of the components into the camera module 20, whereas locating the nozzle on the vehicle body 1' can change the appearance of the vehicle styling, but leaves the nozzle prone to damages from the outside. A nozzle located within the cavity of the camera module body can have the advantage that it is more easily integrated into the vehicle without the danger of receiving damage from the outside. But with such a not shown configuration, depending on the mechanical realization of the camera deployment system, it could be possible that the cleaning of the optical element cannot not be performed when the camera module body is in the deployed state, such that the camera module body has to be retraced into the cavity for cleaning.

On the one hand, if cleaning is to be performed during operation of the vehicle, it is advantages to allow a cleaning when the camera module is in the deployed state. On the other hand, if the camera module needs to be cleaned, the information coming from the camera module might not reliable, such that the time needed for retracing, cleaning and redeploying is not critical. One additional advantage of moving the camera module from the deployed into the retracted state for cleaning is the interaction with the static cleaning means during such a movement, which results in an enhanced cleaning effect.

One disadvantage of using only static cleaning means is that at some point of time they also have to be cleaned or replaced to fulfill a mechanical cleaning in a satisfactory manner. But due to the combination with active cleaning means a cleaning of the static cleaning means can be automatically achieved. For example, the nozzle of the active cleaning means 6 of FIG. 1 can be used to spray a cleaning fluid onto the static cleaning means 5 while the camera module 20 is moving between the retraced and the deployed state.

In addition or alternatively, the active cleaning means can be adapted to be movable such as to allow directing a cleaning fluid jet at different directions, therefore targeting also a static cleaning means. In FIG.1 the nozzle of the active cleaning means 6 can for example be adapted to implement a rotation to direct the cleaning fluid jet on the static wiper blade 5.

Depending on the location of the active cleaning means, additional active cleaning means can be employed. For example when the active cleaning means is located on the vehicle body, an additional active cleaning means can be situated inside the cavity of the camera module, such that it can also target the passive cleaning means.

A movable active cleaning means can also be used to clean other devices or parts. For example, one can place a device or part in front of or adjacent to the camera module and activate a cleaning function for example by pushing a button such that the nozzle moves not to direct the cleaning fluid onto the optical element, but towards the region in front or adjacent of the camera module and, thus, onto the device or target. For example when a mobile phone or the hands of a vehicle user are dirty, they can be cleaned in such a manner.

A cleaning means suitable for cleaning an optical element 4, 4' is also described in U.S. patent application No. 15/189353, filed on June 22, 2016 for LENS CLEANER WITH BENDING ACTUATOR and claiming priority to European patent application No. EP 15173201.3, filed on June 22, 2015 for LENS CLEANING WITH FLEXURAL ACTUATOR. This cleaning device for cleaning an optical device of a motor vehicle features at least two cleaning units and at least one holder on which the cleaning units are arranged. Each cleaning unit has a drive part and a cleaning part, wherein the drive part features an electroactive polymer and can at least partly move the cleaning part. The holder can move between a working position, in which the cleaning units are positioned relative to the optical device in such a manner that the drive part can move the cleaning parts across a surface of the optical device that is to be cleaned, and a rest position, in which the cleaning units are positioned away from the optical device. The cleaning device is embodied in such a manner that each cleaning part of the cleaning units is moved over a subarea assigned to it of the surface to be cleaned, wherein the subareas can at least partly overlap. Another embodiment of a cleaning means an optical element 4, 4' of a motor vehicle disclosed in this document has at least one wiper element which is movable when transferred from a first end position into a second end position via a surface of a disc- and/or dome-shaped optical element of the optical device and has at least one drive unit, which comprises at least one holding means for fixing the wiper element to the drive unit as well as at least one first drive means and at least one second drive means, of which at least one drive means has at least one shape memory element at least in sections. This cleaning means is characterised in that the first drive means and/or the second drive means comprises at least one kinematics by way of which the wiper element can be transferred from the first end position into the second end position by a translational movement, in particular a linear movement. This and other aspects of the referenced documents can be alone and in combination essential for carrying out the present invention.

Another cleaning means for an optical element 4, 4' is described in International patent application No. PCT/EP2017/060104, filed on April 27, 2017 for CLEANING SYSTEM FOR A CAMERA LENS and claiming priority to German published patent application No. DE 10 2016 108 247, filed on May 3, 2016 for REINIGUNGSSYSTEM FÜR EINE KAMERALINSE. It discloses a cleaning system for a camera lens comprising a cover, drive means and a housing. The cover is adapted to at least partially enclose at least one camera having at least one camera lens. The drive means is adapted to rotationally move the cover relative to the camera and the housing is adapted to hold the cover and the drive means. The housing at least partially encloses the cover and comprises at least one opening for allowing electromagnetic radiation to pass through the cover to the lens. This and other aspects of the referenced documents can be alone and in combination essential for carrying out the present invention.

Furthermore, a cleaning means for an optical element 4, 4' is also described in the European patent No. EP 2792556, filed on April 15, 2013 for WISCHVORRICHTUNG. The wiper device for an optical device of a motor vehicle has at least one wiper element, at least one drive unit. The wiper element is movable when transferred from a first end position into a second end position via a surface of a disc- and/or dome-shaped optical element of the optical device. The at least one drive unit comprises at least one holding means for fixing the wiper element to the drive unit as well as at least one first drive means and at least one second drive means of which at least one drive means has at least in sections at least one shape memory element. The first drive means and/or the second drive means comprises at least one kinematics by way of which the wiper element can be transferred from the first end position into the second end position by a translational movement, in particular a linear movement. This and other aspects of the referenced document can be alone and in combination essential for carrying out the present invention.

Additionally, a cleaning means for an optical element 4, 4' is also disclosed in U.S. patent application No. 15/872686 filed on January 16, 2018 for WIPING DEVICE AND METHOD FOR WIPING AN OPTICS ELEMENT, AND A REAR VIEW DEVICE OR DRIVER ASSISTANCE DEVICE FOR USE IN A VEHICLE and claiming priority to German patent application No. DE 10 2017 100 741.5, filed on January 16, 2017 for WIPING DEVICE AND METHOD FOR WIPING AN OPTICS ELEMENT, AND A REAR VIEW DEVICE OR DRIVER ASSISTANCE DEVICE FOR USE IN A VEHICLE. The wiping device is adapted for wiping an optics element clean of water or of particles, in particular for wiping the surface of a lens or of a window which lens or window is transmissive to visible light, to ultraviolet radiation and/or infrared radiation and preferably placed in front or as part of a camera. Said wiping device comprises a housing and a wiping element able to undergo a movement with respect to the housing. The wiping device is configured in such a manner that such movement is caused by coupling a first unit in or on the wiping element with a second unit in the housing via a time-variable electromagnetic field. This and other aspects of the referenced documents can be alone and in combination essential for carrying out the present invention.

Thus the cleaning means of the present invention comprises the cleaning device, cleaning unit, cleaning part, cleaning system, wiping device, wiper device, wiper element, wiping element, wiper blade, wiping body, wiping portion, brush, lip, nozzle, fan and other elements having a similar functionality in the aforementioned documents incorporated by reference, the actuation means of the present invention comprises the drive part, drive unit, drive means, a stator and a rotor of an electromotor, a linear motor, a positioning drive, a motor, a windmill and other elements having a similar functionality in the aforementioned documents incorporated by reference and the optical element of the present invention comprises the optical device, optics element, optical element and other elements having a similar functionality in the aforementioned documents incorporated by reference.

The invention also relates to a control unit 30 comprising a microcontroller 32 for controlling the deployment system and the cleaning means, especially the active cleaning means. Controlling these functions requires a vehicle bus interface 31, so that designated vehicle commands from the vehicle data bus 29 can be interpreted by the microcontroller 32 and decoded to functional instructions. These instructions then can activate and control for example dedicated motor drive integrated circuits (not shown), driving the actuation means.

The vehicle data bus 29 can be for example a Controller Area Network (CAN) bus and the vehicle bus interface 31 a CANbus interface, such as a CAN transceiver.

Shown in FIG. 4 is a block diagram of a control unit 30 of the invention. The control unit 30 receives data from the vehicle data bus 29 and interprets the commands to control the different functions. One embodiment of such a control unit 30 according to the invention comprises the controls for a solenoid 33, a spray pump 34, at least a first and second actuator 35, 36 and a sensor connector 37 for connecting sensors. Depending on the specific deployment system, cleaning means and additionally realized functionalities, more or less controls can necessarily be provided.

The vehicle bus interface 31 receives the command instructions via the vehicle data bus 29 and converts them to command instructions for the microcontroller 32, for example in form of voltage levels. The command instructions for the microcontroller 31 are of a form and range specified for the type of microcontroller in use and are in general different from the form and range of the command instructions sent via the vehicle data bus 29.

The solenoid 33 can be used to move the nozzle of a spray pump, in particular eject the nozzle, from a stored or retraced position to an active or deployed position and back. But it could also be used for other purposes relating to the camera device of the motor vehicle of the invention, for example to lock and unlock the camera deployment system, such that it cannot be opened manually from the outside, or to move an optical element of the camera device, such that for example the focus or received light intensity of the camera device is changed.

The spray pump can be used to apply a cleaning fluid on the optical element 4, 4' to facilitate cleaning as described above and in the documents incorporated by reference, but can also target other surfaces and objects as further described below.

The actuator is used to move the camera device, components of the camera device and/or components of the vehicle. For example a first actuator can be used to move the camera between the deployed and the retraced state. A second actuator can then be used to move the active cleaning means, for example a wiper. But an actuator could also be used to change the field of view, for example by rotating the camera, or the focus of the camera. If rotary encoders or other sensors are built into at least one of the actuators, position and/or rotational direction detection is possible. Alternatively or in combination, external sensors can also allow to measure position and rotational direction of the actuator driven devices. Combining multiple sensor and/or encoder outputs, a more reliable and fault tolerant system can be constructed. In general the different actuators can move different parts, such as housings, covers, optical elements, spray nozzles and other vehicle components.

The sensor connector 37 is used to acquire data from sensors of the surrounding of the camera device and/or vehicle or internal data related to the components and the conditions of the vehicle. Such external data can be as non-limiting examples temperature, pressure, humidity and/or light conditions. Internal conditions can comprise as non-limiting examples the position and direction of the camera device, the active cleaning means such as for example a wiper, the position, configuration and condition, in particular the contamination, of optics of the camera device and many more things. For example magnetically reactive Hall Effect IC's, which change state when activated by the proximity of a magnet, can be used to detect the mechanical position of the camera device, between the normal position and the retracted position, and that of a wiper, especially a rotary wiper.

Therefore the mechanical movement can be monitored by various sensors to achieve a repeatable function, enabling camera deployment and retraction and cleaning, for example by spray nozzle ejection, spray pumping and wiper cleaning application.

Additionally, the control unit 30 can control various other functions from other components 38, such as for example heating means, information and/or warning means, sound means and/or the vehicle component, whereby the vehicle component being preferably comprised by a locking system, a windshield cleaning system, a head lamp cleaning system, a back lamp cleaning system, an engine system, a braking system and/or display system.
Especially the functions of the camera device and the cleaning means described in the documents incorporated by reference can be advantageously controlled by the control unit 30. Advantageously, the electronic components are integrated on a printed circuit board assembly (PCBA).

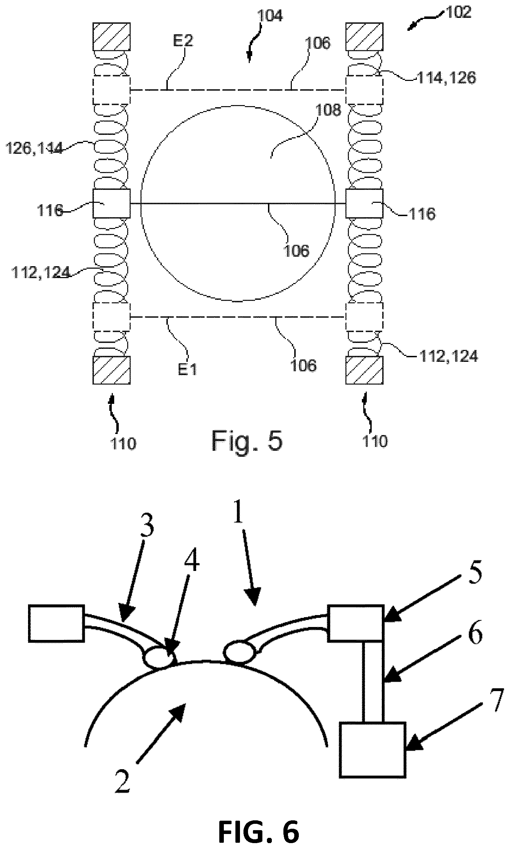

FIG. 5 shows a wiper device 106 of the cleaning means when transferring from a first end position E1 into a second end position E2. Here, the wiper device 106 is in the form shown in Figure 5 above the optics element 108 of the optical element 104. Dashed lines are shown in Figure 5, the wiper device 106 and holding means 116 in the first end position E1 and in the second end position E2. As can be seen from FIG. 5, the wiper device 106 in the first end position E1 is spaced away from contact with an edge in the surface of the optics element 108. In the second end position E2, the wiper device 106 is also arranged at the edge of the surface of the optics element 108, but spaced on one of the first end position E1 opposite side of the optics element 108 to the edge of the optics element 108. In the embodiment shown in the figure, a first drive means 112 of the actuation means 110 comprises a shape memory element, in particular a shape memory spring 124. In order to transfer the wiper device 106 in the second end position E2, a second drive means 114 of the actuation means 110 comprises a return spring 126.

FIG. 6 shows a schematic cross-sectional view of another cleaning means comprising cleaning units 201. Cleaning units 201 have a drive part 203 and a cleaning part 204. An optical device 202 of the optical element can be cleaned when the drive part 203 moves the cleaning part 204 over certain areas of the optical device 202. For this purpose, the drive part 203 has an active material, in particular an electroactive polymer. Similar to a muscle, the drive part 203 can be deformed so that the cleaning part 204 makes a movement on a surface to be cleaned, in particular a predetermined partial surface. Through the interaction of several cleaning units 201, an effective cleaning result can be achieved. This is especially true for curved and / or complex shaped surfaces.

The cleaning units 201 can be arranged on a holder 205, wherein the cleaning units 201 can also be distributed over a plurality of holders 205, i. e. two, three, four, five or more holders 205 each have one, two, three, four, five or more cleaning units 201.

The holder 205 may be connected via a guide 206 with a position drive 207. Thus, the holder 205 and thus the cleaning unit 201 between a working position, as shown in FIG. 6, and a rest position (not shown) to be moved. The rest position is not of particular importance to the present invention, but should be such that the optical device 202 is not limited in its function. Further, the rest position may be such that at least the cleaning parts 204 and / or other parts of the cleaning device are protected from contamination. When using a plurality of holders 205, all or even only part of the holder 205 can be moved between a working position and a rest position. Also, the holders 205 can be moved separately from each other, for example, for different cleaning actions, the cleaning parts 4 can be adapted based on the pollution materials.

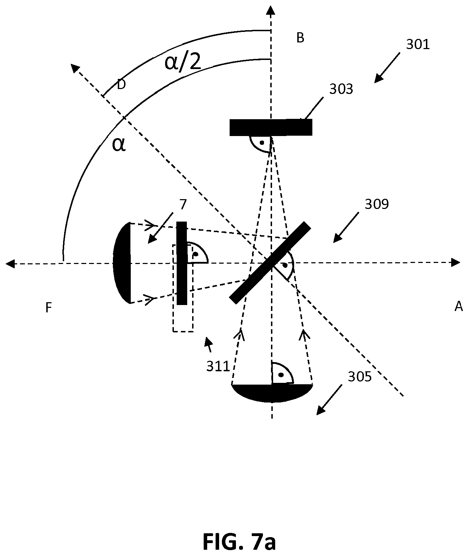

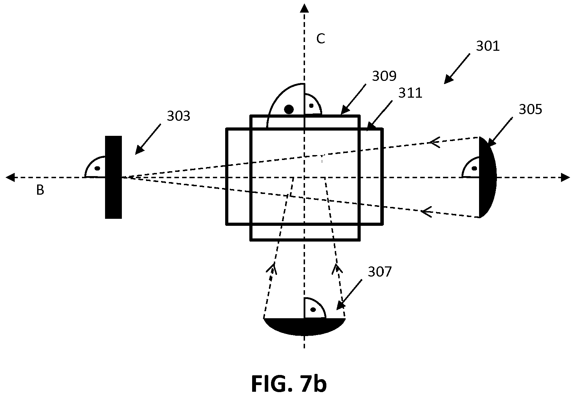

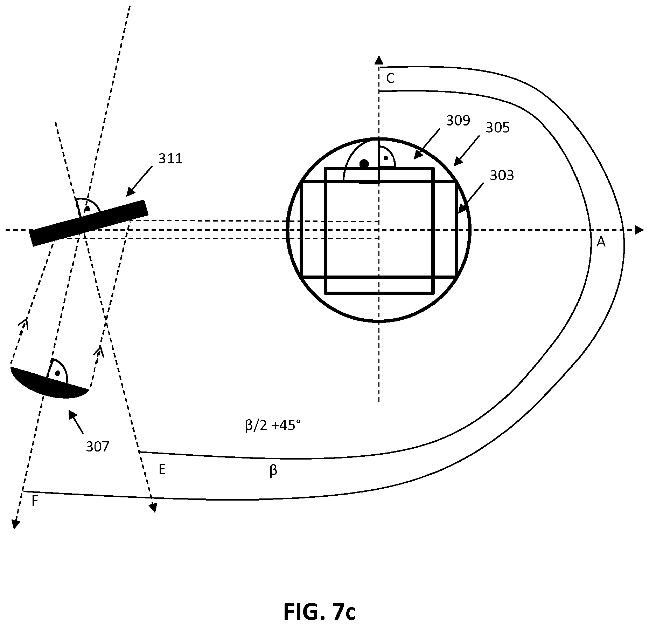

A camera device of the motor vehicle of the present invention can also comprise an imaging system. One example of an imaging system 301 according to an embodiment is illustrated in FIGs. 7a, 7b and 7c comprises an image sensor 303, a first lens unit 305 with a first optical axis falling together with the optical axis of the image sensor 303, a second lens unit 307 with a second optical axis running perpendicularly to the first optical axis, a first shutter-glass 309, and a second shutter glass 311. The grid system that is shown by means of dotted lines only serves for the purpose of explaining the spatial orientation of the individual components of the imaging system 301 relative to each other via the optical axes. Thereby, the axes marked A, B, and C are orientated at an angle of 90° relative to each other. In the shown embodiment, the first lens unit 305 could be a camera monitor lens having a field of view of 40°, whereas the second lens unit 307 could be a surround view lens having a field of view of 180°, or vice versa. Important is that the optical axes of the two lens units 305, 307 cross each other within the first shutter-glass 309, namely on the optical axis of the first shutter-glass 309 as can be seen in figure 7a.

Thus, from FIGs. 7a and 7b it can be seen that the first lens unit 305 is orientated opposite of the image sensor 303, i.e. orientated at an angle of 180° relative to the image sensor 303. Electromagnetic radiation that is focused by the first lens unit 305 can be projected directly onto the image sensor 303 by passing through the first shutter-glass 309 that is arranged at an angle of 45° in the optical path between the image sensor 303 and the first lens unit 305. When the first shutter-glass 309 is in a transmissive mode, the electromagnetic radiation can be freely propagate through the first shutter-glass 309, whereas when the first shutter-glass 309 is in a reflective mode an essential part of the electromagnetic radiation cannot propagate through the first shutter-glass 309. The skilled person would know that switching between the modes can be done by applying and removing an electric signal to the first shutter-glass 309.

FIGs. 7a and 7b also show that a second lens unit 307 is arranged at an angle of α relative to the image sensor 303. In the shown embodiment, the second lens unit 307 is arranged at an angle of α = 90° relative to the image sensor 303, where α = ∠BF, and α/2 = ∠BD. As it can be seen from FIG. 7a, the first shutter-glass 309 is arranged at an angle of 45° relative to the second lens unit 307 and to the image sensor 303. When the first shutter-glass 309 is in the reflective mode, electromagnetic radiation from the second lens unit 307 is reflected by the first shutter-glass 309 at an angle of 90° onto the image sensor 303.

The angle α can in principle take any absolute value above zero and up to 90° to stay within the invention. I.e. the angle as such is not of importance as long as it differs from zero and allows for a crossing of the first and second optical axes.

In order to enhance the operation of the imaging system 301, a second shutter-glass 311 is shown that is arranged between the second lens unit 307 and the first shutter-glass 309. Also, in FIG. 7 a dotted line around the second shutter-glass 311 indicates that the second shutter-glass 311 could be located in an oblique plane.

Further, the second shutter-glass 311 can be switched so that the second shutter-glass 311 is in the transmissive mode when the first shutter glass 309 is also in the transmissive mode and vice versa. This allows to alternately project electromagnetic radiation substantially exclusively either from the first lens unit 305 or from the second lens unit 307 onto the image sensor 303. Correspondingly, an evaluation unit (not shown) that could be connected to the image sensor 303 could alternately obtain and evaluate image signals corresponding to the electromagnetic radiation from either the first lens unit 305 or the second lens unit 307 with a frequency f that corresponds to the switching frequency between the transmissive and reflective modes.

In FIG. 7c a front view of the imaging system 301 is shown. In the shown embodiment, the second lens unit 307 is also arranged at an angle β, where β = ∠CF, and β/2 + 45° = ∠CE. For the cases when α = 180°, the first shutter-glass 309 does not need to be employed, and when β = 270°, the second shutter-glass 11 does not need to be employed. As can be seen from figure 1c, the second optical axes of the second lens unit 307 crosses the optical axis of the second shutter-glass 311 within the second shutter-glass 311.

Sometimes it can happen that a human or animal is soiling or damaging a vehicle, for example by scratching, urinating or the like. When the camera module is silently deployed, neither the human nor the animal will be aware and warned of its presence. As a countermeasure and to prevent damaging or soiling, the nozzle of an active cleaning means can then be directed at a human or animal as soon as the presence thereof is detected by a not shown sensor such that the cleaning fluid can be sprayed on the human or animal to scare them away.

To minimize the noise which might go together with moving the camera module 20, 20' of the invention between the deployed state shown in FIG. 1 and 2 the retracted state of FIG. 3, a not shown low-noise actuator, in particular comprising an electrical actuator, an electromagnetic actuator, a shape memory alloy (SMA) actuator and/or a piezo actuator, can be used for such a movement. Alternatively or additionally, an active noise cancelation system can used to reduce the noise generated by actuators needed for the movement of the camera module 20, 20'. Noise cancellation systems typically comprise on the one hand microphones for analyzing the present noises, and on the other hand speakers for outputting acoustic sound waves to cancel or drown out the present noise.

One additional advantage of having at least one microphone is the possibility of noise analyses, even not restricted to the said actuators. Such an analysis can e.g. indicate the presence of damaged or exhausted parts. For example having a tire with nail or a flat tire changes the noise of the vehicle in a characteristic way. Another example is the change of the noise over time, indicating an exhausted part. When the lifetime of a motor, gear, actuator or other mechanically moving or mechanically stressed part is nearly reached, often the noise emitted by that part will change in a characteristic way, leading to the perception of the future failure and the possibility to replace that part before breaking or catastrophic failure occurs.

The camera device of the motor vehicle of the invention can also be provided with an additional element for providing an information and/warning. Such an additional element can comprise a display module such as display module 8' shown in FIG. 2, and/or a not shown light module. The display module 8' can comprise information on the vehicle, for example the name or a logo of the manufacturer of the vehicle. It can be provided as a label, coating imprint or the like.

Any light module presently used in rear view mirrors can be integrated into a camera device of the motor vehicle of the invention. In this respect reference is made to the light modules listed in the introduction of this specification.

The additional element can be arranged on the module body as shown in FIG. 2, such that it is only discernible in a deployed state.

As the camera module 20, 20' of the camera device of the motor vehicle of the invention as such functions similar as a pop up head light which can only be seen when in use, the information and/or warning message provided by the additional element attracts the attention due to this pop up effect even more.

### Reference sign list

- E1, E2: end position
- 1, 1': vehicle body
- 2, 2': camera module body
- 3, 3': camera aperture
- 4, 4': optical element
- 5, 5': static cleaning means
- 6, 6': active cleaning means
- 7': push button
- 8': display component

- 20, 20': camera module

- 29: vehicle data bus
- 30: control unit
- 31: vehicle bus interface
- 32: microcontroller
- 33: solenoid
- 34: spray pump
- 35: actuator 1
- 36: actuator 2
- 37: sensor connector
- 38: other components

- 102: wiper device
- 104: optical element
- 106: wiping element
- 108: optics element
- 110: actuation means
- 112: first drive means
- 114: second drive means
- 116: holding means
- 124: shape memory spring
- 126: return spring

- 202: optical device
- 202a-d: partial areas of the surface of the optical device
- 203: drive part
- 204: cleaning part
- 205: holder
- 206: guide
- 207: positioning drive

- 301: imaging system
- 303: image sensor
- 305: first lens unit
- 307: second lens unit
- 309: first shutter-glass
- 311: second shutter-glass
- A, B, C: reference axes
- D, E, F, G: reference axes
- α, β, γ: reference angles

## Claims

1. Motor vehicle comprising
a clock, a counter and/or heating means,
in addition to a vehicle body, a vehicle data bus (29) and at least one display system in connection with at least one camera device,
with the camera device comprising:
• a camera module (20, 20'),
the camera module being provided with a module body (2, 2') having at least one aperture (3, 3'), at least one sensor adapted to detect electromagnetic radiation of at least one specific spectral range and being arranged within the module body (2, 2') such that electromagnetic radiation can reach the sensor when passing the aperture (3, 3'), and at least one optical element (4, 4') mounted to substantially cover, fill or close the aperture (3, 3'); and
• a deployment system adapted for moving the camera module (20, 20') between a retracted state and a deployed state; and
• cleaning means for cleaning the optical element (4, 4'); and
• a control unit (30) for controlling the deployment system and the cleaning means,
wherein
the camera module (20, 20') is adapted to be integrated into side parts of the vehicle body, into doors or exterior rearview devices of the motor vehicle, with the vehicle body (1, 1') having a cavity which receives at least a part of the camera device, such that
• in the retracted state at least the optical element (4, 4') is arranged within the cavity of the vehicle body (1, 1'), with the outer surface of the camera module body (2, 2') being generally flush with the exterior of the vehicle body (1, 1'), whereas in the deployed state the camera sensor is operable and at least the optical element (4, 4') protrudes from the vehicle body (1, 1'), and
• a vehicle bus interface (31) comprised by the control unit (30) is configured to convert command instructions from the vehicle data bus (29) into command instructions for a microcontroller (32) comprised by the control unit (30), wherein the microcontroller (32) for controlling at least the deployment system and the cleaning means for cleaning the optical element (4, 4') receives signals from and controls the clock, the counter and/or the heating means.

2. Motor vehicle according to claim 1, further comprising
actuation means, having at least a first and a second actuator for actuating the deployment system and/or the cleaning means.

3. Motor vehicle according to claim 2, wherein
the at least first and/or second actuator comprises a rotary encoder and/or a sensor for position and/or rotational direction detection.

4. Motor vehicle according to any one of the preceding claims, wherein
the microcontroller (32) is further suited for controlling at least one dirt sensor, information and/or warning means, sound means and/or a vehicle component, and/or
the microcontroller (32) is suited for receiving signals from the at least one dirt sensor, the information and/or warning means, the sound means and/or the vehicle component.

5. Motor vehicle according to any one of the preceding claims, further comprising
a sensor connector (37) for receiving external sensor data, in particular determining the position and/or rotational direction of the deployment system and/or the cleaning means.

6. Motor vehicle according to claim 5, wherein
the microcontroller (32) combines sensor and/or encoder outputs.

7. Motor vehicle according to any one of the preceding claims, wherein
the optical element (4, 4') comprises at least one lens, light window, glass plate, transparent cover, semi-transparent cover, a scratch-proof cover, filter, wave plate, beam splitter, polarizer, diffuser, mirror element, prism, window, beam displacer, an optical device, an optics element, grating and/or holographic plate.

8. Motor vehicle according to any one of the claims 2 or 3 to 7, dependent from claim 2, wherein
the actuation means comprises at least one low-noise actuator, which preferably is selected from a group comprising an electrical actuator, an electromagnetic actuator, a shape memory alloy (SMA) actuator and/or a piezo actuator.

9. Motor vehicle according to any one of the preceding claims, wherein
the cleaning means comprise at least one static cleaning means (5, 5', 6'), which does not move with the camera module (20, 20'), and/or
the cleaning means comprise at least one moving cleaning means (6) which moves together with the camera module (20, 20'), and/or
cleaning the optical element (4, 4') is during a movement of the camera module (20, 20') between the retracted state and the deployed state.

10. Motor vehicle according to any one of the preceding claims, wherein
the cleaning means comprise at least one mechanical cleaning means (5, 5') for contacting the optical element (4, 4') when the camera module (20, 20') is moved between the retracted state and the deployed state, and/or
the cleaning means comprise at least one active cleaning means (6, 6') for cleaning the optical element (4, 4') by applying a cleaning fluid, with the active cleaning means (6, 6') preferably comprising at least one nozzle.

11. Motor vehicle according to any one of the preceding claims, wherein
at least a part of the cleaning means, preferably the nozzle, can be moved relative to the module body (2, 2') and/or the vehicle body (1, 1').

12. Motor vehicle according to any one of the preceding claims, further comprising
sealing means for sealing the camera module body (2, 2') within the vehicle body (1, 1') at least in the retracted state,
with preferably the mechanical cleaning means (5, 5') and the sealing means being connected or provided together.

13. Motor vehicle according to any one of the preceding claims, further comprising actuation means (7') for manually activating the movement of the camera module (20, 20') and/or of the cleaning means, and/or for manually activating a cleaning action of the cleaning means, with preferably the actuation means (7') being provided on the camera module body (2, 2').

14. Motor vehicle according to any one of the preceding claims, wherein
the cleaning means comprises a cleaning device, cleaning unit, cleaning part, cleaning system, wiping device, wiper device, wiper element, wiping element, wiper blade, wiping body, wiping portion, brush, lip, nozzle and/or fan, and/or wherein the actuation means comprises a drive part, drive unit, drive means, a stator and a rotor of an electromotor, a linear motor, a positioning drive, a motor and/or a windmill.

15. Motor vehicle according to any one of the preceding claims, further comprising
a heater of the heating means in thermal contact with the optical element (4, 4') and/or at least one information and/or warning element of the information and/or warning means, in particular comprising a display module and/or a light module, preferably provided on the camera module body (2, 2'), and/or a sound system of the sound means.

16. Motor vehicle according to claim 15, wherein
the information and/or warning element is arranged within the cavity of the vehicle body (1, 1') in the retracted state and/or is discernible from the outside of the vehicle body (1, 1') at least in the deployed state, and/or the information and/or warning element is cleanable by the cleaning means.

17. Motor vehicle according to any one of the preceding claims, further comprising
a sound system comprising a noise cancellation system.

18. Motor vehicle according to claim 17, wherein
the sound system comprises at least one microphone for detecting sound waves and/or at least one loudspeaker for outputting sound waves, in particular for compensating detected sound waves.

19. Motor vehicle according to any one of the preceding claims, wherein
• the static cleaning means (5, 5', 6'), the sealing means, the heating means and/or the sound means are attached to the outside of the vehicle body (1, 1') or within the cavity, and/or
• the deployment system is arranged within the cavity.

20. Motor vehicle according to claim 19, wherein
the control unit (30) is connected to the vehicle engine control unit and/or electronic engine management system, or
the control unit is integrated into the vehicle engine control unit and/or electronic engine management system.

21. Motor vehicle according to claim 20, wherein
the control unit (30) receives signals from the actuation means (7'), the dirt sensor, the information and/or warning means, the sound means, a sensor and/or camera unit and/or the vehicle component, in addition to its microcontroller (32) receiving signals from the clock, the counter and/or the heating means.

22. Motor vehicle according to claim 20, wherein
the vehicle component is comprised by a locking system, a windshield cleaning system, a head lamp cleaning system, a back lamp cleaning system, an engine system, a braking system and/or a display system.

## Patentansprüche

1. Kraftfahrzeug, umfassend:
eine Uhr, einen Zähler und/oder Heizmittel,
zusätzlich zu einer Fahrzeugkarosserie, einem Fahrzeugdatenbus (29) und mindestens einem Anzeigesystem, das mit mindestens einer Kameravorrichtung verbunden ist,
wobei die Kameravorrichtung umfasst:
• ein Kameramodul (20, 20'),
wobei das Kameramodul mit einem Modulkörper (2, 2'), der mindestens eine Öffnung (3, 3') aufweist, mindestens einem Sensor, der dazu ausgelegt ist, elektromagnetische Strahlung mindestens eines bestimmten Spektralbereichs zu detektieren und der innerhalb des Modulkörpers (2, 2') so angeordnet ist, dass elektromagnetische Strahlung den Sensor erreichen kann, wenn sie die Öffnung (3, 3') passiert, und mindestens einem optischen Element (4, 4'), das so angebracht ist, dass es die Öffnung (3, 3') im Wesentlichen abdeckt, ausfüllt oder verschließt, versehen ist; und
• ein Ausfahrsystem, das zum Bewegen des Kameramoduls (20, 20') zwischen einem eingefahrenen Zustand und einem ausgefahrenen Zustand ausgelegt ist; und
• Reinigungsmittel zum Reinigen des optischen Elements (4, 4'); und
• eine Steuereinheit (30) zum Steuern des Ausfahrsystems und der Reinigungsmittel, wobei
das Kameramodul (20, 20') zur Integration in Seitenteile der Fahrzeugkarosserie, in Türen oder Außenrückblickvorrichtungen des Kraftfahrzeugs ausgelegt ist, wobei die Fahrzeugkarosserie (1, 1') einen Hohlraum aufweist, der zumindest einen Teil der Kameravorrichtung aufnimmt, so dass
• im eingefahrenen Zustand zumindest das optische Element (4, 4') innerhalb des Hohlraums der Fahrzeugkarosserie (1, 1') angeordnet ist, wobei die Außenfläche des Kameramodulkörpers (2, 2') im Wesentlichen bündig mit der Außenseite der Fahrzeugkarosserie (1, 1') abschließt, wohingegen im ausgefahrenen Zustand der Kamerasensor funktionsfähig ist und zumindest das optische Element (4, 4') aus der Fahrzeugkarosserie (1, 1') herausragt, und
• eine von der Steuereinheit (30) umfasste Fahrzeugbusschnittstelle (31) konfiguriert ist, um Befehlsanweisungen vom Fahrzeugdatenbus (29) in Befehlsanweisungen für einen von der Steuereinheit (30) umfassten Mikrocontroller (32) umzuwandeln, wobei der Mikrocontroller (32) zur Steuerung zumindest des Ausfahrsystems und der Reinigungsmittel zur Reinigung des optischen Elements (4, 4') Signale von der Uhr, dem Zähler und/oder den Heizmitteln empfängt und diese steuert.

2. Kraftfahrzeug nach Anspruch 1, ferner umfassend
Betätigungsmittel mit mindestens einem ersten und einem zweiten Aktuator zum Betätigen des Ausfahrsystems und/oder der Reinigungsmittel.

3. Kraftfahrzeug nach Anspruch 2, wobei
der mindestens erste und/oder zweite Aktuator einen Drehgeber und/oder einen Sensor zur Positions- und/oder Drehrichtungserfassung umfasst.

4. Kraftfahrzeug nach einem der vorhergehenden Ansprüche, wobei
der Mikrocontroller (32) weiterhin geeignet ist, mindestens einen Schmutzsensor, Informations- und/oder Warnmittel, Schallerzeuger und/oder eine Fahrzeugkomponente zu steuern, und/oder
der Mikrocontroller (32) geeignet ist, Signale von dem mindestens einen Schmutzsensor, den Informations- und/oder Warnmitteln, den Schallerzeugern und/oder der Fahrzeugkomponente zu empfangen.

5. Kraftfahrzeug nach einem der vorhergehenden Ansprüche, ferner umfassend einen Sensoranschluss (37) zum Empfangen externer Sensordaten, insbesondere zum Bestimmen der Position und/oder Drehrichtung des Ausfahrsystems und/oder der Reinigungsmittel.

6. Kraftfahrzeug nach Anspruch 5, wobei
der Mikrocontroller (32) Sensor- und/oder Encoderausgänge kombiniert.

7. Kraftfahrzeug nach einem der vorhergehenden Ansprüche, wobei das optische Element (4, 4') mindestens eine Linse, ein Lichtfenster, eine Glasplatte, eine transparente Abdeckung, eine halbtransparente Abdeckung, eine kratzfeste Abdeckung, einen Filter, eine Wellenplatte, einen Strahlteiler, einen Polarisator, einen Diffusor, ein Spiegelelement, ein Prisma, ein Fenster, einen Strahlverschieber, eine optische Vorrichtung, ein optisches Element, ein Gitter und/oder eine holographische Platte umfasst.

8. Kraftfahrzeug nach einem der Ansprüche 2 oder 3 bis 7, abhängig von Anspruch 2, wobei das Betätigungsmittel mindestens einen geräuscharmen Aktuator umfasst, der vorzugsweise aus einer Gruppe ausgewählt ist, die einen elektrischen Aktuator, einen elektromagnetischen Aktuator, einen Aktuator aus einer Formgedächtnislegierung (SMA) und/oder einen Piezo-Aktuator umfasst.

9. Kraftfahrzeug nach einem der vorhergehenden Ansprüche, wobei die Reinigungsmittel mindestens ein statisches Reinigungsmittel (5, 5', 6') umfassen, das sich nicht mit dem Kameramodul (20, 20') bewegt, und/oder die Reinigungsmittel mindestens ein bewegliches Reinigungsmittel (6) umfassen, das sich zusammen mit dem Kameramodul (20, 20") bewegt, und/oder die Reinigung des optischen Elements (4, 4') während einer Bewegung des Kameramoduls (20, 20') zwischen dem eingefahrenen Zustand und dem ausgefahrenen Zustand erfolgt.

10. Kraftfahrzeug nach einem der vorhergehenden Ansprüche, wobei die Reinigungsmittel mindestens ein mechanisches Reinigungsmittel (5, 5') zur Kontaktierung des optischen Elements (4, 4') bei der Bewegung des Kameramoduls (20, 20') zwischen dem eingefahrenen Zustand und dem ausgefahrenen Zustand umfassen, und/oder die Reinigungsmittel mindestens ein aktives Reinigungsmittel (6, 6') zur Reinigung des optischen Elements (4, 4') durch Aufbringen einer Reinigungsflüssigkeit umfassen, wobei das aktive Reinigungsmittel (6, 6') vorzugsweise mindestens eine Düse umfasst.

11. Kraftfahrzeug nach einem der vorhergehenden Ansprüche, wobei zumindest ein Teil der Reinigungsmittel, vorzugsweise die Düse, relativ zu dem Modulkörper (2, 2') und/oder dem Fahrzeugkörper (1, 1') bewegt werden kann.

12. Kraftfahrzeug nach einem der vorhergehenden Ansprüche, ferner umfassend Dichtungsmittel zum Abdichten des Kameramodulkörpers (2, 2') innerhalb der Fahrzeugkarosserie (1, 1') zumindest im eingefahrenen Zustand,
wobei vorzugsweise die mechanischen Reinigungsmittel (5, 5') und die Dichtungsmittel miteinander verbunden oder zusammen vorgesehen sind.

13. Kraftfahrzeug nach einem der vorhergehenden Ansprüche, ferner umfassend Betätigungsmittel (7') zum manuellen Aktivieren der Bewegung des Kameramoduls (20, 20') und/oder der Reinigungsmittel und/oder zum manuellen Aktivieren einer Reinigungsaktion der Reinigungsmittel, wobei die Betätigungsmittel (7') vorzugsweise am Kameramodulkörper (2, 2') vorgesehen sind.

14. Kraftfahrzeug nach einem der vorhergehenden Ansprüche, wobei das Reinigungsmittel eine Reinigungsvorrichtung, eine Reinigungseinheit, ein Reinigungsteil, ein Reinigungssystem, eine Wischvorrichtung, eine Wischervorrichtung, ein Wischerelement, ein Wischelement, ein Wischerblatt, einen Wischkörper, einen Wischabschnitt, eine Bürste, eine Lippe, eine Düse und/oder ein Gebläse umfasst, und/oder wobei das Betätigungsmittel ein Antriebsteil, eine Antriebseinheit, ein Antriebsmittel, einen Stator und einen Rotor eines Elektromotors, eines Linearmotors, eines Positionierantriebs, eines Motors und/oder eines Windrades umfasst.

15. Kraftfahrzeug nach einem der vorhergehenden Ansprüche, ferner umfassend ein Heizelement der Heizmittel in thermischem Kontakt mit dem optischen Element (4, 4') und/oder mindestens ein Informations- und/oder Warnelement des Informations- und/oder Warnmittels, insbesondere umfassend ein Anzeigemodul und/oder ein vorzugsweise am Kameramodulkörper (2, 2') vorgesehenes Lichtmodul und/oder eine Beschallungsanlage des Schallerzeugers.

16. Kraftfahrzeug nach Anspruch 15, wobei
das Informations- und/oder Warnelement im eingefahrenen Zustand innerhalb des Hohlraums der Fahrzeugkarosserie (1, 1') angeordnet ist und/oder zumindest im ausgefahrenen Zustand von der Außenseite der Fahrzeugkarosserie (1, 1') her erkennbar ist, und/oder das Informations- und/oder Warnelement durch die Reinigungsmittel reinigbar ist.

17. Kraftfahrzeug nach einem der vorhergehenden Ansprüche, ferner umfassend eine Beschallungsanlage, umfassend ein Geräuschunterdrückungssystem.

18. Kraftfahrzeug nach Anspruch 17, wobei
die Beschallungsanlagemindestens ein Mikrofon zum Erfassen von Schallwellen und/oder mindestens einen Lautsprecher zum Ausgeben von Schallwellen, insbesondere zum Kompensieren erfasster Schallwellen, umfasst.

19. Kraftfahrzeug nach einem der vorhergehenden Ansprüche, wobei
• die statischen Reinigungsmittel (5, 5', 6'), die Dichtungsmittel, die Heizmittel und/oder die Schallerzeuger an der Außenseite der Fahrzeugkarosserie (1, 1') oder innerhalb des Hohlraums angebracht sind, und/oder
• das Ausfahrsystem in dem Hohlraum angeordnet ist.

20. Kraftfahrzeug nach Anspruch 19, wobei
die Steuereinheit (30) mit der Motorsteuereinheit des Fahrzeugs und/oder dem elektronischen Motormanagementsystem verbunden ist, oder
die Steuereinheit in die Motorsteuereinheit des Fahrzeugs und/oder in das elektronische Motormanagementsystem integriert ist.

21. Kraftfahrzeug nach Anspruch 20, wobei
die Steuereinheit (30) Signale von den Betätigungsmitteln (7), dem Schmutzsensor, den Informations- und/oder Warnmitteln, den Schallerzeugern, einer Sensor- und/oder Kameraeinheit und/oder der Fahrzeugkomponente empfängt, zusätzlich dazu, dass ihr Mikrocontroller (32) Signale von der Uhr, dem Zähler und/oder den Heizmitteln empfängt.

22. Kraftfahrzeug nach Anspruch 20, wobei
die Fahrzeugkomponente ein Schließsystem, ein Windschutzscheibenreinigungssystem, ein Scheinwerferreinigungssystem, ein Rückleuchtenreinigungssystem, ein Motorsystem, ein Bremssystem und/oder ein Anzeigesystem umfasst.

## Revendications

1. Véhicule à moteur comprenant
une horloge, un compteur et/ou un moyen de chauffage,
en plus d'un corps de véhicule, un bus de données de véhicule (29) et au moins un système d'affichage en connexion avec au moins un dispositif de caméra,
le dispositif de caméra comprenant :
• un module de caméra (20, 20'),
le module de caméra étant muni d'un corps de module (2, 2') ayant au moins une ouverture (3, 3'), d'au moins un capteur adapté pour détecter un rayonnement électromagnétique d'au moins une plage spectrale spécifique et qui est agencé au sein du corps de module (2, 2') de telle sorte qu'un rayonnement électromagnétique puisse atteindre le capteur lorsqu'il passe par l'ouverture (3, 3'), et d'au moins un élément optique (4, 4') monté afin d'essentiellement recouvrir, remplir ou fermer l'ouverture (3, 3') ; et
• un système de déploiement adapté pour déplacer le module de caméra (20, 20') entre un état rétracté et un état déployé ; et
• un moyen de nettoyage pour nettoyer l'élément optique (4, 4') ; et
• une unité de contrôle (30) pour contrôler le système de déploiement et le moyen de nettoyage,
dans lequel
le module de caméra (20, 20') est adapté pour être intégré dans des parties latérales du corps de véhicule, dans des portes ou des dispositifs extérieurs de vue arrière du véhicule à moteur, le corps de véhicule (1, 1') ayant une cavité qui reçoit au moins une partie du dispositif de caméra, de telle sorte que
• dans l'état rétracté, au moins l'élément optique (4, 4') soit agencé au sein de la cavité du corps de véhicule (1, 1'), la surface externe du corps de module de caméra (2, 2') étant généralement alignée avec l'extérieur du corps de véhicule (1, 1'), tandis que dans l'état déployé, le capteur de caméra est opérable et au moins l'élément optique (4, 4') dépasse du corps de véhicule (1, 1'), et
• une interface de bus de véhicule (31) comprise par l'unité de contrôle (30) soit configurée pour convertir des instructions de commande issues du bus de données de véhicule (29) en instructions de commande pour un microcontrôleur (32) compris par l'unité de contrôle (30), le microcontrôleur (32) pour contrôler au moins le système de déploiement et le moyen de nettoyage pour nettoyer l'élément optique (4, 4') recevant des signaux issus de l'horloge, du compteur et/ou du moyen de chauffage et contrôlant ceux-ci.

2. Véhicule à moteur selon la revendication 1, comprenant en outre
un moyen d'actionnement, ayant au moins un premier et un deuxième actionneur pour actionner le système de déploiement et/ou le moyen de nettoyage.

3. Véhicule à moteur selon la revendication 2, dans lequel
l'au moins un premier et/ou deuxième actionneur comprend un encodeur rotatif et/ou un capteur pour la position et/ou la détection de direction de rotation.

4. Véhicule à moteur selon l'une quelconque des revendications précédentes, dans lequel
le microcontrôleur (32) est en outre approprié pour contrôler au moins un capteur de saleté, un moyen d'information et/ou d'avertissement, un moyen sonore et/ou un composant de véhicule, et/ou
le microcontrôleur (32) est approprié pour recevoir des signaux issus de l'au moins un capteur de saleté, moyen d'information et/ou d'avertissement, moyen sonore et/ou composant de véhicule.

5. Véhicule à moteur selon l'une quelconque des revendications précédentes, comprenant en outre
un connecteur de capteur (37) pour recevoir des données de capteur externe, en particulier déterminer la position et/ou la direction de rotation du système de déploiement et/ou du moyen de nettoyage.

6. Véhicule à moteur selon la revendication 5, dans lequel
le microcontrôleur (32) combine des sorties de capteur et/ou d'encodeur.

7. Véhicule à moteur selon l'une quelconque des revendications précédentes, dans lequel l'élément optique (4, 4') comprend au moins une lentille, une fenêtre lumineuse, une plaque de verre, un couvercle transparent, un couvercle semi-transparent, un couvercle anti-éraflure, un filtre, une lame onde, un diviseur de faisceau, un polariseur, un diffuseur, un élément miroir, un prisme, une fenêtre, un déplaceur de faisceau, un dispositif optique, un élément optique, une grille et/ou une plaque holographique.

8. Véhicule à moteur selon l'une quelconque des revendications 2 ou 3 à 8, dépendantes de la revendication 2, dans lequel
le moyen d'actionnement comprend au moins un actionneur à faible bruit, qui est de préférence sélectionné dans un groupe comprenant un actionneur électrique, un actionneur électromagnétique, un actionneur à alliage à mémoire de forme (SMA) et/ou un actionneur piézoélectrique.

9. Véhicule à moteur selon l'une quelconque des revendications précédentes, dans lequel
le moyen de nettoyage comprend au moins un moyen de nettoyage statique (5, 5', 6'), qui ne se déplace pas avec le module de caméra (20, 20'), et/ou
le moyen de nettoyage comprend au moins un moyen de nettoyage mobile (6) qui se déplace conjointement avec le module de caméra (20, 20'), et/ou
le nettoyage de l'élément optique (4, 4') est pendant un mouvement du module de caméra (20, 20') entre l'état rétracté et l'état déployé.

10. Véhicule à moteur selon l'une quelconque des revendications précédentes, dans lequel
le moyen de nettoyage comprend au moins un moyen de nettoyage mécanique (5, 5') pour venir en contact avec l'élément optique (4, 4') lorsque le module de caméra (20, 20') est déplacé entre l'état rétracté et l'état déployé, et/ou
le moyen de nettoyage comprend au moins un moyen de nettoyage actif (6, 6') pour nettoyer l'élément optique (4, 4') par application d'un fluide de nettoyage, le moyen de nettoyage actif (6, 6') comprenant de préférence au moins une buse.

11. Véhicule à moteur selon l'une quelconque des revendications précédentes, dans lequel au moins une partie du moyen de nettoyage, de préférence la buse, peut être déplacée par rapport au corps de module (2, 2') et/ou au corps de véhicule (1, 1').

12. Véhicule à moteur selon l'une quelconque des revendications précédentes, comprenant en outre
un moyen d'étanchement pour étanchéifier le corps de module de caméra (2, 2') au sein du corps de véhicule (1, 1') au moins dans l'état rétracté,
le moyen de nettoyage mécanique (5, 5') et le moyen d'étanchement étant de préférence connectés ou fournis ensemble.

13. Véhicule à moteur selon l'une quelconque des revendications précédentes, comprenant en outre
un moyen d'actionnement (7') pour activer manuellement le mouvement du module de caméra (20, 20') et/ou du moyen de nettoyage, et/ou pour activer manuellement une action de nettoyage du moyen de nettoyage, le moyen d'actionnement (7') étant de préférence fourni sur le corps de module de caméra (2, 2').

14. Véhicule à moteur selon l'une quelconque des revendications précédentes, dans lequel le moyen de nettoyage comprend un dispositif de nettoyage, une unité de nettoyage, une partie de nettoyage, un système de nettoyage, un dispositif d'essuyage, un dispositif essuyeur, un élément essuyeur, un élément d'essuyage, une lame d'essuyeur, un corps d'essuyage, une portion d'essuyage, une brosse, une lèvre, une buse et/ou un ventilateur, et/ou dans lequel le moyen d'actionnement comprend une partie d'entraînement, une unité d'entraînement, un moyen d'entraînement, un stator et un rotor d'un moteur électrique, un moteur linéaire, un entraînement de positionnement, un moteur et/ou une éolienne.

15. Véhicule à moteur selon l'une quelconque des revendications précédentes, comprenant en outre
un dispositif de chauffage du moyen de chauffage en contact thermique avec l'élément optique (4, 4') et/ou au moins un élément d'information et/ou d'avertissement du moyen d'information et/ou d'avertissement, en particulier comprenant un module d'affichage et/ou un module lumineux, de préférence fournis sur le corps de module de caméra (2, 2'), et/ou un système sonore du moyen sonore.

16. Véhicule à moteur selon la revendication 15, dans lequel
l'élément d'information et/ou d'avertissement est agencé au sein de la cavité du corps de véhicule (1, 1') dans l'état rétracté et/ou est discernable depuis l'extérieur du corps de véhicule (1, 1') au moins dans l'état déployé, et/ou l'élément d'information et/ou d'avertissement est nettoyable par le moyen de nettoyage.

17. Véhicule à moteur selon l'une quelconque des revendications précédentes, comprenant en outre
un système sonore comprenant un système d'annulation de bruit.

18. Véhicule à moteur selon la revendication 17, dans lequel
le système sonore comprend au moins un microphone pour détecter des ondes sonores et/ou au moins un haut-parleur pour émettre des ondes sonores, en particulier pour compenser des ondes sonores détectées.

19. Véhicule à moteur selon l'une quelconque des revendications précédentes, dans lequel
• le moyen de nettoyage statique (5, 5', 6'), le moyen de scellement, le moyen de chauffage et/ou le moyen sonore sont attachés à l'extérieur du corps de véhicule (1, 1') ou au sein de la cavité, et/ou
• le système de déploiement est agencé au sein de la cavité.

20. Véhicule à moteur selon la revendication 19, dans lequel
l'unité de contrôle (30) est connectée à l'unité de contrôle de moteur de véhicule et/ou au système de gestion de moteur électronique, ou
l'unité de contrôle est intégrée dans l'unité de contrôle de moteur de véhicule et/ou le système de gestion de moteur électronique.

21. Véhicule à moteur selon la revendication 20, dans lequel
l'unité de contrôle (30) reçoit des signaux issus du moyen d'actionnement (7), du capteur de saleté, du moyen d'information et/ou d'avertissement, du moyen sonore, d'une unité de capteur et/ou de caméra et/ou du composant de véhicule, en plus de son microcontrôleur (32) recevant des signaux issus de l'horloge, du compteur et/ou du moyen de chauffage.

22. Véhicule à moteur selon la revendication 20, dans lequel
le composant de véhicule est composé par un système de verrouillage, un système de nettoyage de pare-brise, un système de nettoyage de phare avant, un système de nettoyage de phare arrière, un système de moteur, un système de freinage et/ou un système d'affichage.
